# FASCICULE DE BREVET EUROPEEN

(11) **EP 1 207 058 B1**
(45) Date de publication et mention de la délivrance du brevet: **06.06.2007**
(21) Numéro de dépôt: 01125769.8
(22) Date de dépôt: 29.10.2001
(51) Int. Cl.: B60C 11/11

(54) **Sculpture de bande de roulement de pneumatique à carcasse radiale**
Laufflächenprofil für einen Fahrzeugluftreifen
Tread pattern for radial pneumatic tyre

(30) Priorité: 13.11.2000 FR 0014674
(43) Date de publication de la demande: 22.05.2002
(73) Titulaire: Société de Technologie Michelin, 63000 Clermont-Ferrand (FR); MICHELIN Recherche et Technique S.A., 1763 Granges-Paccot (CH)
(72) Inventeur: Thiebaud, Philippe, 63110 Beaumont (FR)
(74) Mandataire: Diernaz, Christian

(56) Documents cités:
- FR-A- 2 648 753
- US-A- 4 664 166
- PATENT ABSTRACTS OF JAPAN vol. 009, no. 286 (M-429), 13 novembre 1985 (1985-11-13) & JP 60 128005 A (SUMITOMO GOMU KOGYO KK), 8 juillet 1985 (1985-07-08)
- PATENT ABSTRACTS OF JAPAN vol. 012, no. 113 (M-683), 9 avril 1988 (1988-04-09) & JP 62 241712 A (OHTSU TIRE & RUBBER CO LTD), 22 octobre 1987 (1987-10-22)
- PATENT ABSTRACTS OF JAPAN vol. 015, no. 443 (M-1178), 12 novembre 1991 (1991-11-12) & JP 03 189213 A (YOKOHAMA RUBBER CO LTD:THE), 19 août 1991 (1991-08-19)
- PATENT ABSTRACTS OF JAPAN vol. 011, no. 247 (M-615), 12 août 1987 (1987-08-12) & JP 62 055202 A (YOSHIO OKADA), 10 mars 1987 (1987-03-10)

## Description

L'invention est relative aux sculptures de bande de roulement pour pneumatiques et plus particulièrement aux bandes de roulement de pneumatiques présentant un sens de roulage préférentiel et destinés notamment pour l'équipement de véhicules poids lourd.

L'expérience montre que pour des bandes de roulement de pneumatiques à carcasse radiale pour poids lourd comportant une pluralité de blocs délimités par des rainures d'orientation générale circonférentielle et transversale, ces blocs subissent une usure en dent de scie (usure dite irrégulière en ce sens qu'elle se développe préférentiellement au voisinage d'un bord desdits blocs). Ce type d'usure est particulièrement important sur les bandes de roulement des pneumatiques montés sur les essieux moteur du véhicule que ce soit en montage simple ou jumelé. Par définition, un bloc de sculpture comprend une face supérieure destinée à venir en contact avec la chaussée pendant le roulage du pneumatique et des faces latérales délimitant les rainures ; chaque intersection d'une face latérale avec la face supérieure formant une arête. Le bord du bloc entrant le premier dans la zone de contact est dit le bord d'attaque : ce bord peut être constitué par une ou plusieurs arêtes, la ou les face(s) latérale(s) limitée(s) par ces arêtes formant la paroi d'attaque. Le bord du bloc sortant le dernier de la zone de contact est dit le bord de fuite et la face latérale à laquelle il appartient est dite la paroi de fuite du bloc.

L'usure irrégulière (en dent de scie) dont il est ici question se manifeste par une usure plus importante localisée sur la face de contact au voisinage du bord de fuite.

Pour réduire cette usure irrégulière en dent de scie constatée pour des pneumatiques équipant en particulier les essieux moteur d'un véhicule poids lourd, il a été proposé dans le brevet européen **EP 0485778** une sculpture de bande de roulement comportant une pluralité de blocs séparés les uns des autres par des rainures d'orientation longitudinale et transversale. Une variante d'exécution présentée dans ce brevet consiste à prévoir que les faces des blocs délimitées par les rainures transversales forment avec une direction perpendiculaire à la surface de roulement des angles différents (positif pour la paroi d'attaque, négatif - en contre dépouille - sur la paroi de fuite).

Il a été fait le constat qu'un angle de dépouille positif sur la paroi d'attaque était favorable sur l'usure irrégulière et principalement sur son évolution car, bien qu'apparaisse dès les premiers kilomètres une usure légèrement plus prononcée sur le bord de fuite, cette usure est ensuite très régulière sur l'ensemble du bloc alors que pour des sculptures n'ayant pas de dépouille dissymétrique entre paroi d'attaque et paroi de fuite l'usure est irrégulière dès les premiers kilométrages et s'amplifie fortement tout au long de l'utilisation du pneumatique.

Toutefois, cette amélioration de la performance en usure irrégulière s'accompagne d'une dégradation sensible de la performance bruit mesurée dans un test de roulage sous couple sur véhicule (test décrit dans la norme ISO362 et la directive 92/97/EEC).

Avec le développement de nouveaux véhicules poids lourd de forte puissance et équipés de ralentisseur hydraulique, le besoin s'est fait sentir de mettre au point de nouvelles sculptures de bande de roulement qui réduisent l'usure irrégulière (mesurée comme la différence d'usure maximale obtenue entre le bord de fuite et le bord d'attaque) sans pour autant augmenter la vitesse moyenne d'usure (évaluée comme la perte de matière totale par kilomètre parcouru) tout en ne conduisant pas à une augmentation du bruit en roulage sous couple en particulier dans le test ISO362.

JP-A-60-128005 propose une bande de roulement correspondante au préambule de la revendication 1.

La présente invention vise à réaliser une bande de roulement pour enveloppe de pneumatique à carcasse radiale destiné à équiper l'essieu moteur d'un véhicule poids lourd qui réduit la différence d'usure entre le bord d'attaque et le bord de fuite sans diminution des performances de durée de vie sur usure. La présente invention vise aussi un pneumatique directionnel à armature de carcasse radiale pour poids lourd et comprenant une bande de roulement conforme à l'invention.

La bande de roulement selon l'invention comporte un sens préférentiel de roulage et comprend une pluralité d'éléments de sculpture (sous la forme de blocs et/ou de lames de gomme), délimités par des découpures d'orientation générale circonférentielle et transversale, chaque bloc ayant une face supérieure de contact et des faces latérales, l'intersection de chaque face latérale avec la face supérieure formant une arête, la ou les arêtes rentrant les premières dans le contact formant le bord d'attaque de l'élément, la ou les arêtes sortant les dernières du contact formant le bord de fuite du bloc ; en outre, une pluralité d'éléments de sculpture comprend une pluralité de puits de section S et de profondeur H débouchant sur la face de contact de chacun desdits éléments ; chaque élément étant divisé en une partie avant et une partie arrière par un plan médian virtuel Pv, ledit plan médian Pv étant perpendiculaire à la face supérieure de contact de l'élément et à la direction longitudinale de la bande et passant en outre par le barycentre G de la face de contact de l'élément à l'état neuf, la partie avant comprenant le bord d'attaque et la partie arrière comprenant le bord de fuite.

La bande de roulement selon l'invention est caractérisée en ce que, à l'état neuf et pour chaque élément de sculpture pourvus de puits, le volume Vpa de l'ensemble des puits situés dans la partie avant de l'élément de sculpture est supérieur au volume Vpf de l'ensemble des puits situés dans la partie arrière dudit élément.

Par découpure, on entend soit une rainure, c'est-à-dire un évidement réalisé dans la gomme de la bande de roulement, cet évidement ayant une largeur moyenne supérieure ou égale à 2 mm, soit une incision, c'est-à-dire un évidement de largeur moyenne inférieure à 2. mm

Par puits, on entend un trou de petite section débouchant sur la face de contact et s'étendant sur une partie de l'épaisseur de la bande de roulement ; ces puits peuvent être réalisés notamment au moment du moulage de la bande au moyen d'éléments moulants montés sur le moule de ladite bande.

La bande de roulement selon l'invention est dite comporter un sens préférentiel de roulage dès lors que sa présence sur un pneumatique confère audit pneumatique un sens préférentiel de roulage qui peut être repéré sur l'un des flancs dudit pneumatique ; ce sens de roulage peut être inhérent à la sculpture sans la présence des puits tels que réalisés dans la sculpture selon l'invention.

Dans le cas où au moins un puits serait présent à la fois dans la partie avant et la partie arrière d'un élément de sculpture (par une inclinaison appropriée par rapport à la face supérieure de l'élément), une partie du volume de ce puits est comptabilisée dans le volume total Vpa et le restant dans volume total Vpf.

La différence des volumes des puits réalisés dans la partie de chaque élément située entre le plan médian Pv et le bord d'attaque et la partie située entre le plan médian et le bord de fuite confère à chaque élément une dissymétrie entre l'entrée et la sortie du contact ; tous les éléments comportant des puits ont la même direction de dissymétrie à savoir un volume de puits plus grand du côté bord d'attaque ce qui est une caractéristique essentielle à l'invention. Cette originalité confère à la sculpture un caractère directionnel ou bien renforce le caractère directionnel quand la sculpture est directionnelle par la disposition particulière des éléments composant ladite sculpture. Bien entendu, tous les éléments de sculpture comportant des puits doivent présenter le même sens de dissymétrie sans pour autant devoir comporter un même nombre de puits ou des puits de mêmes dimensions.

Préférentiellement, le volume Vpf est au plus égal à 30% de Vpa (dans les exemples de réalisation décrits Vpf est nul ou quasi nul).

À l'opposé de l'enseignement de certains documents (voir la demande de brevet JP92-85108) préconisant une répartition préférentielle des puits sur les parties qui s'usent les plus rapidement, et de manière surprenante, la demanderesse a constaté que la présence d'un plus grand volume de puits de petite section sur la partie avant des éléments de sculpture permettait de réduire de manière sensible l'écart d'usure entre le bord d'attaque et le bord de fuite en réduisant la vitesse d'usure sur le bord de fuite sans pénaliser la vitesse d'usure moyenne des éléments.

Dans le cas d'une sculpture de bande de roulement comportant au moins une nervure délimitée par des rainures d'orientation générale circonférentielle ou longitudinale, ladite nervure étant en outre pourvue d'une pluralité d'incisions (c'est-à-dire des découpures de largeur inférieure à 2 mm) d'orientation générale transversale délimitant une pluralité d'éléments de sculpture sous forme de blocs ou de lames de gomme, il est également avantageux de prévoir la présence de puits selon une répartition volumique dissymétrique dans une pluralité de ces lames de gomme. Chaque lame de gomme comprend une face latérale d'attaque coupant la face de contact selon un bord d'attaque correspondant au bord rentrant le premier dans le contact au cours du roulage du pneumatique pourvu de cette bande. Chaque lame comprend un bord de fuite correspondant au dernier bord de la lame à sortir de la zone de contact.

Une lame de gomme est un bloc dont la longueur mesurée dans le sens longitudinal de la bande est inférieure à la longueur de ce bloc dans la direction transversale.

Dans ce dernier cas, il est avantageux de prévoir qu'une pluralité de lames de gomme d'une nervure sont pourvues de puits débouchant sur la face de contact de ces lames, chaque lame étant divisée en une partie avant et une partie arrière par un plan médian virtuel Pv, ledit plan médian Pv étant perpendiculaire à la face supérieure de contact de la lame de gomme et à la direction longitudinale de la bande et passant en outre par le barycentre G de la face de contact de la lame à l'état neuf, la partie avant comprenant le bord d'attaque et la partie arrière comprenant le bord de fuite.

La bande de roulement selon l'invention est caractérisée en ce que, à l'état neuf et pour chaque lame de gomme pourvue de puits, le volume Vpa de l'ensemble des puits situés dans la partie avant de la lame est supérieur au volume Vpf de l'ensemble des puits situés dans la partie arrière de la lame.

Outre le gain constaté en usure irrégulière et en bruit en roulage sous couple, il a été observé un gain sensible en adhérence par la présence d'arêtes supplémentaires à la surface de chaque bloc, ces arêtes étant formées par les intersections des puits avec la face de contact du bloc à l'état neuf et tant que ces puits sont présents dans la bande.

Avantageusement, et suivant des dispositions préférentielles :
- les blocs ou lames présentent des angles de dépouilles positifs sur la face d'attaque;
- les blocs ou lames présentent des angles de dépouilles positifs sur la face d'attaque supérieurs aux angles de dépouille des faces de fuite;
- les blocs ou lames présentent des faces de fuite en contre dépouille (angle négatif);
- les puits ont des profondeurs qui peuvent varier selon la position dans les blocs ou les lames et en particulier, les puits ont des profondeurs qui diminuent progressivement en allant vers le bord de fuite soit à partir du bord d'attaque soit à partir d'une distance mesurée à partir du bord d'attaque;
- les puits ont même profondeur et la densité desdits puits diminue en allant du bord d'attaque vers le bord de fuite;
- les puits ont des sections comprises entre 0.2 et 12 mm² ; bien entendu, un puits peut présenter une géométrie de section non circulaire comme par exemple elliptique ;
- les puits ont des profondeurs au moins supérieures à 5 mm ; elles peuvent être comprises entre 5 et 25 mm;
- le nombre moyen de puits mesuré sur la face supérieure de contact de chaque bloc ou lame est inférieur ou égal à 15 par centimètre carré et préférentiellement compris entre 3 et 10 par centimètre carré ;
- les puits se terminent par un élargissement pour limiter les problèmes d'endurance en fond de puits.

Les dispositions préférentielles citées ci-dessus peuvent bien sûr être combinées entre elles par l'homme du métier en fonction des objectifs recherchés.

L'invention est maintenant illustrée de manière non limitative par les figures des exemples de réalisation de l'objet de l'invention décrits ci-après et selon lesquelles :
La figure 1 montre, vue en plan une sculpture selon l'invention ;
La figure 2 montre une vue en coupe d'un bloc de la sculpture montrée à la figure 1 ;
Les figures 3, 4, 5 et 6 montrent, vues en coupe, des variantes de réalisation de sculptures selon l'invention ;
La figure 7 montre en plan une autre variante d'une sculpture selon l'invention;
La figure 8 montre une coupe selon la ligne VIII-VIII d'un bloc de la sculpture présentée à la figure 7 ;
La figure 9 montre une vue en plan d'une bande de roulement comportant une pluralité de nervures pourvues d'incisions ;
La figure 10 montre une autre variante d'un sculpture selon l'invention comportant des nervures et des blocs.

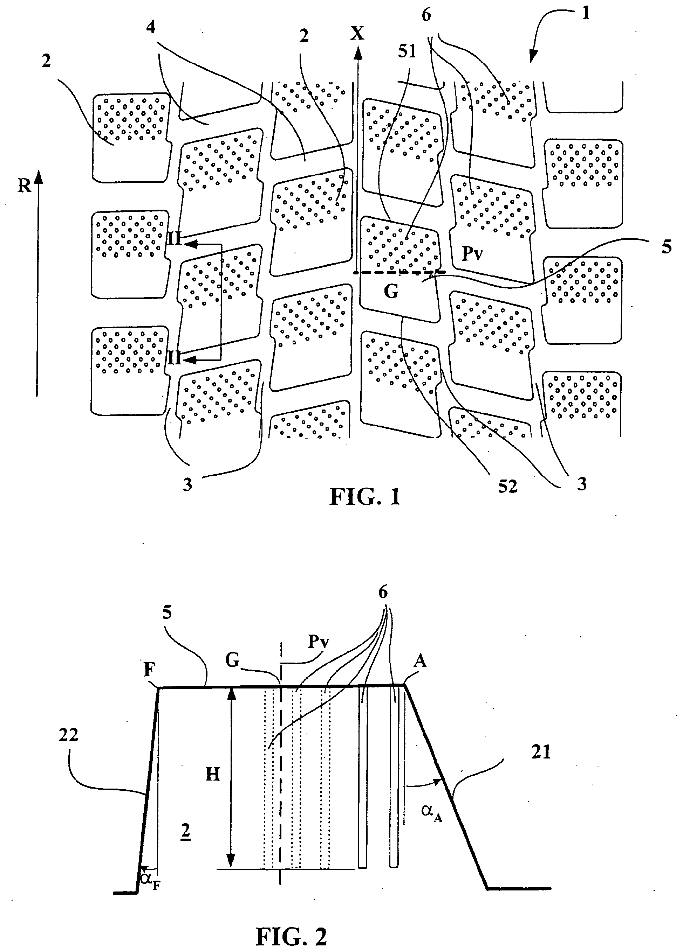

La figure 1 représente vue en plan une bande de roulement 1 à l'état neuf d'un pneumatique de poids lourd de dimension 315/80 R 22.5 comprenant six rangées de blocs 2 disposés de manière à conférer un sens de roulage audit pneumatique (symbolisé par la flèche R sur lé dessin). Les blocs 2 sont délimités par des rainures 3 d'orientations circonférentielles de forme générale rectiligne et des rainures 4 transversales reliant lesdites rainures circonférentielles 3. La face supérieure 5 de chacun des blocs 2 visible sur la figure 1 et destinée à venir en contact avec la chaussée pendant le roulage est limitée par des arêtes. L'arête située à l'avant du bloc constitue le bord d'attaque 51 du bloc puisqu'elle est la première des arêtes dudit bloc à venir en contact avec la chaussée pendant le roulage ; l'arête opposée longitudinalement est la dernière à sortir du contact et forme le bord de fuite 52 du bloc 5. La ligne droite, repérée Pv, passant par le point G, représentant le barycentre de la face supérieure de contact 5 (et correspondant au centre d'inertie de cette surface), représente la trace sur la face de contact d'un plan médian Pv perpendiculaire à la face supérieure 5 de contact du bloc 2 et à la direction longitudinale X de la bande.

En outre, il est prévu une pluralité de puits 6 débouchant sur la face de contact 5 de chaque bloc 2 à l'état neuf; tous les puits 6 ont les mêmes dimensions, à savoir :
- section circulaire de diamètre égal à 2 mm ;
- profondeur égale à 10 mm,
- nombre moyen de puits par centimètre carré de surface : 4,5 ;
- axe des puits : sensiblement perpendiculaire à la face de contact.

Les puits sont répartis sur sept lignes sensiblement parallèles au bord d'attaque 51 et placés en quinconce. Par ailleurs, la quasi totalité des puits est présente sur la partie avant de chaque bloc et le volume Vpa est très grand comparativement au volume Vpf(Vpf représente ici au maximum moins de 9% de Vpa). La même sculpture sans les puits correspond à une sculpture de pneumatique commercialisée par la demanderesse sous l'appellation XDE2.

Sur la figure 2 est montrée une vue en coupe selon la ligne II-II d'un bloc 2 de la sculpture montrée à la figure 1 ; ce bloc 2 présente une face d'attaque 21 et une face de fuite 22 coupant la face supérieure 5 respectivement selon les bords d'attaque et de fuite dont les traces sur le plan de la figure 2 sont repérées par les points A et F. La face de fuite 22 fait avec une perpendiculaire à la face supérieure de contact 5 un angle α_{F} inférieur à l'angle α_{A} fait par la face d'attaque par rapport à la même perpendiculaire. On distingue une pluralité de puits 6 débouchant sur la face de contact 5 et s'étendant sur une même profondeur H, une majorité desdits puits 6 étant compris entre le plan Pv passant par le point G barycentre de la face de contact et la face d'attaque 21.

Un essai comparatif de roulage a été effectué avec des pneumatiques 315/80 R 22.5 gonflés et chargés aux conditions nominales (pression : 8 bars ; charge : 3000 daN). Des pneumatiques témoin de sculpture XDE2 (sans puits) ont été comparés à des pneumatiques de même dimension et ayant une bande de roulement conforme à l'invention et correspondant à la description donnée en regard de la figure 1. Les roulages d'usure ont été faits avec des véhicules de fortes puissance équipés de ralentisseur hydraulique roulant à une vitesse moyenne de 100 km/h sur circuit reproduisant les conditions de roulage de type autoroutier.

Résultats obtenus :
- en usure irrégulière « dent de scie » : l'écart d'usure entre le bord d'attaque et le bord de fuite égale en moyenne à 2.5 mm pour un kilométrage donné sur les pneumatiques témoin, est réduit à 2 mm pour le même kilométrage avec les pneumatiques selon l'invention ;
- en usure régulière : gain de 10% avec la sculpture selon l'invention (cela signifie qu'une sculpture selon l'invention permet de réaliser un kilométrage augmenté de 10% par rapport à celui que permet de faire un pneumatique de l'art antérieur.

Par ailleurs, on note un gain significatif, c'est-à-dire un gain en moyenne supérieur à 1 dB(A), en bruit sous couple mesuré dans les conditions d'essai de la directive européenne CEE 92/97 (pression égale à 8 bars et charge de 1000 daN) correspondant à la norme ISO 362.

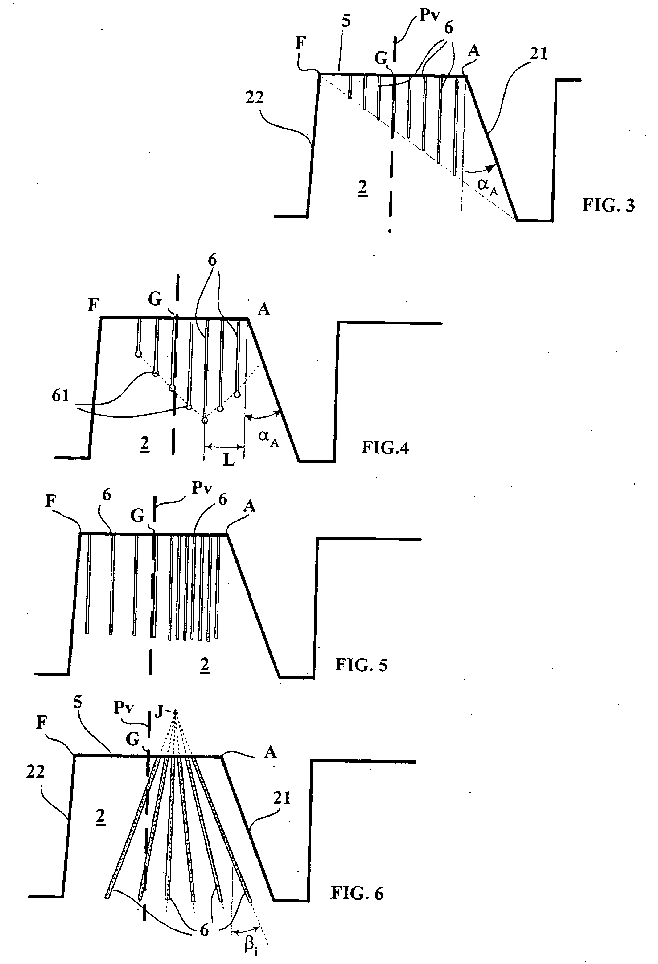

Sur les figures 3, 4, 5 et 6 sont présentées, vues en coupe dans l'épaisseur de variantes de bandes de roulement selon l'invention, diverses réalisations de puits dans des blocs de sculptures. Toutes ces coupes sont réalisées dans un plan perpendiculaire à la face de contact du pneumatique neuf et contenant la direction longitudinale. Par commodité, on conserve, pour toutes ces figures, les mêmes références que celles déjà employées avec les figures 1 et 2.

Sur la figure 3, la coupe d'un bloc 2 montre que ce bloc comporte une face d'attaque 21 faisant un angle de dépouille α_{A} positif avec une direction perpendiculaire à la face de contact 5 ; l'intersection de la face d'attaque 21 avec la face de contact 5 correspond au point A sur la figure 3. La face de fuite 22 de ce bloc présente un angle de dépouille nul (elle est perpendiculaire à la face de contact) et coupe la face de contact 5 en F sur cette figure 3. La trace du plan médian Pv sur le plan de coupe est matérialisée par une ligne droite Pv en traits pointillés ; la partie avant du bloc correspond à la partie comprise entre Pv et la face d'attaque. Dans cette variante, l'ensemble du bloc est pourvu d'une pluralité de puits 6 de section comprise entre 0.2 et 12 mm², ces puits ayant des profondeurs qui diminuent régulièrement en allant du bord d'attaque vers la partie arrière du bloc située entre Pv et le bord de fuite, les puits de profondeur maximale étant situés dans la partie avant du bloc.

Dans une autre variante, à la figure 4, sensiblement identique à celle de la figure 3, les puits 6 les plus profonds sont situés à une distance L du bord d'attaque (des puits de profondeur moindre sont disposés de part et d'autre de cette position) afin de moduler les pressions dans la région du bloc près du bord d'attaque.

Dans une autre variante, à la figure 5, tous les puits 6 ont la même section et la même profondeur, mais le nombre de puits par unité de surface est plus élevé sur la partie avant du bloc 2 que sur la partie arrière.

Dans la variante montrée à la figure 6, les puits 6 ont des axes rectilignes faisant des angles βᵢ, différents de zéro, avec une perpendiculaire à la face de contact 5 à l'état neuf. Dans cette variante, les puits 6 au voisinage de la face d'attaque 21 ont leurs axes sensiblement parallèles à ladite face tandis que les autres puits font des angles différents entre eux (l'ensemble des axes des puits sont ici concourants en un point virtuel J situé à l'extérieur du bloc).

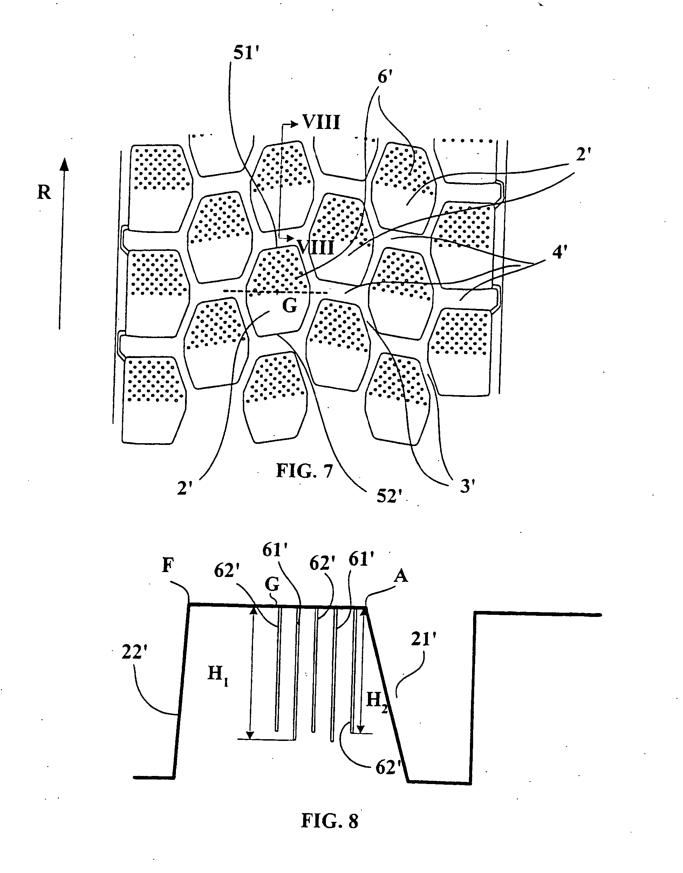

La figure 7 représente vue en plan une bande de roulement à l'état neuf d'un pneumatique de poids lourd de dimension 315/80 R 22.5 comprenant six rangées de blocs 2' disposés sensiblement en quinconce. Les blocs 2' sont délimités par des rainures d'orientations circonférentielles 3' en zigzag et des rainures transversales 4' reliant lesdites rainures circonférentielles. Contrairement à la sculpture montrée à la figure 1 et exception faite des puits dans les deux variantes, cette dernière sculpture n'est pas en soi directionnelle (la flèche R sur la figure indique le sens préconisé de rotation).

Sur la partie avant de chaque bloc 2' on a réalisé, au moment du moulage de la bande de roulement, une pluralité de puits 6' de section circulaire de diamètre 2 mm alignés selon des lignes parallèles au bord d'attaque 51', les puits 6' étant placés en quinconce d'une ligne à sa ou ses voisine(s). En outre, et pour éviter une transition trop brutale au moment de la disparition de la totalité des puits 6' après usure de la bande de roulement, des puits 62' de certaines lignes ont une profondeur H₂ égale à 10 mm tandis que les puits 61' des lignes voisines ont une profondeur H₁ égale à 12 mm. En combinaison avec la présence de ces puits 6' sur la partie avant des blocs 2', la face d'attaque 21' forme un angle de dépouille positif avec une perpendiculaire à la face de contact du bloc à l'état neuf. Cette dépouille positive, égale à 15°, se prolonge sur les deux faces latérales en diminuant progressivement vers la face de fuite 22' pour rester sensiblement constante, et égale à 3°, sur une partie des faces latérales et la face de fuite.

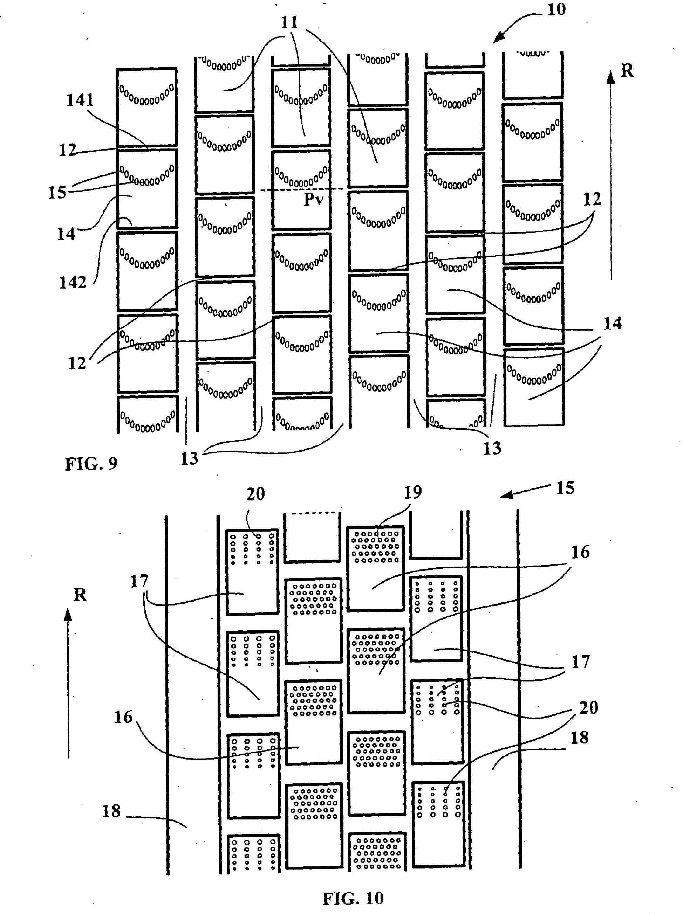

Une autre variante de bande de roulement selon l'invention est montrée à la figure 9. Sur cette figure 9, montrant en plan une partie d'une bande de roulement 10, on distingue six nervures longitudinales 11 délimitées par des rainures circonférentielles 13. Chaque nervure est pourvue d'une pluralité d'incisions 12 de largeur égale à 0.6 mm orientées dans la direction transversale. Sur chaque nervure 11, les incisions délimitent des blocs de gomme 14 qui, compte tenu du sens de montage du pneumatique pourvu de cette bande, comportent un bord d'attaque 141 et un bord de fuite 142.

Pour réduire l'usure irrégulière des blocs de gomme 14 se développant préférentiellement sur et au voisinage du bord de fuite 142 tout en réduisant de façon sensible le bruit sous couple, il est réalisé pendant le moulage de la bande une pluralité de puits 15 de profondeur sensiblement égale à la profondeur des incisions transversales 12 ; ces puits débouchent sur la face de contact du bloc de gomme 14 (face en contact avec la chaussée) et sont répartis suivant une ligne circulaire, la concavité de cette ligne étant tournée vers le bord d'attaque 141. De plus, tous les puits d'un même bloc sont situés entre le bord d'attaque 141 et un plan Pv passant par le barycentre de la face de contact de cette lame et perpendiculaire à ladite face (repéré par sa trace Pv sur l'une des lames représentées). Dans le cas présent, tous les blocs de gomme 14 comportent la même répartition de puits 15. La flèche R indique le sens de rotation préconisé lorsque cette bande équipe un pneumatique.

Dans une autre variante au moins les éléments de sculpture situés dans la région médiane de la bande de roulement sont pourvus de puits. Comme montrée en plan à la figure 10, une bande de roulement 15 de pneumatique, ayant un sens de rotation préconisé et repéré par la flèche R, comprend deux nervures longitudinales 18 encadrant quatre rangées de blocs 16, 17 délimités par des rainures d'orientation générale circonférentielle et transversale. Dans cette variante, les blocs 16 des deux rangées centrales sont pourvues d'une pluralité de puits 19 de mêmes dimensions (section et profondeur) disposés entre un bord dit d'attaque et un plan passant par le barycentre de la face de contact du bloc et perpendiculaire à ladite face ; ces puits 19 sont disposés sur une pluralité de lignes et en quinconce d'une ligne à l'autre. Les blocs 17 des rangées intermédiaires (entre les rangées centrales et les nervures) sont pourvus d'une pluralité de puits 20 disposés selon des lignes transversales sensiblement parallèles aux bords d'attaque des éléments, les puits de chaque ligne présentant des sections différentes et décroissantes ou croissantes en allant du bord d'attaque au bord de fuite.

De manière préférentielle, dans l'une quelconque des variantes décrites, on peut prévoir au moins un puits dont l'axe principal présente une inclinaison, par rapport à une perpendiculaire à la face de contact, qui n'est pas constante dans l'épaisseur de la bande.

L'invention n'est pas limitée aux exemples décrits et représentés et diverses modifications peuvent y être apportées sans sortir du cadre défini par les revendications suivantes ; en particulier, l'homme du métier est à même de faire une adaptation dimensionnelle de l'invention aux bandes de roulement de pneumatiques d'autres catégories (notamment pour véhicules de tourisme, camionnettes, ...) tout en combinant les différentes dispositions décrites précédemment.

## Revendications

1. **-** Bande de roulement (1, 10) de pneumatique, cette bande étant prévue pour conférer au pneumatique un sens préférentiel de roulage, cette bande comprenant une pluralité d'éléments de sculpture (2, 2', 14, 16, 17) (sous la forme de blocs et/ou de lames de gomme), chaque élément étant délimité par des découpures d'orientation générale longitudinale (3, 3', 13) et transversale (4, 4', 12), chaque élément ayant une face supérieure de contact et des faces latérales s'étendant dans la direction de l'épaisseur de la bande, l'intersection de chaque face latérale avec la face supérieure de contact formant une arête, la ou les arêtes rentrant les premières dans le contact formant le bord d'attaque (51, 51',141) de l'élément, la ou les arêtes sortant les dernières du contact formant le bord de fuite de l'élément (52, 52', 142) ; une pluralité d'éléments comprend une pluralité de puits (6, 6', 15, 19, 20) de section S et de profondeur H débouchant sur sa face de contact ; chaque élément étant divisé en une partie avant et une partie arrière par un plan médian virtuel Pv, ledit plan médian Pv étant perpendiculaire à la face supérieure de contact de l'élément et à la direction longitudinale de la bande et passant par le barycentre G de la face de contact de l'élément à l'état neuf, la partie avant comprenant le bord d'attaque et la partie arrière comprenant le bord de fuite ; la bande de roulement est **caractérisée en ce que**, à l'état neuf et pour chaque élément de sculpture pourvu d'au moins un puits (6, 6', 15, 19, 20), le volume Vpa de l'ensemble des puits situés dans la partie avant de l'élément de sculpture est supérieur au volume Vpf de l'ensemble des puits situés dans la partie arrière de l'élément de sculpture.

2. - Bande de roulement selon la revendication 1 **caractérisée en ce que** les puits (6, 6', 15, 19, 20) ont des profondeurs au moins égales à 5 mm.

3. - Bande de roulement selon la revendication 2 **caractérisée en ce que** les puits (6, 6', 15, 19, 20) sont disposés selon au moins deux lignes sensiblement parallèles au bord d'attaque, les profondeurs des puits de deux lignes successives étant différentes.

4. - Bande de roulement selon l'une des revendications 1 à 3 **caractérisée en ce que** les puits (6, 6', 15, 19, 20) sont disposés selon au moins deux lignes sensiblement parallèles au bord d'attaque, les puits ayant des sections S comprises entre 0.2 mm² et 12 mm², les sections des puits de deux lignes successives étant différentes.

5. - Bande de roulement selon la revendication 2 **caractérisée en ce que** les puits (6) ont leurs profondeurs H qui diminuent progressivement à partir d'une distance L du bord d'attaque (51) en allant vers le bord de fuite (52).

6. - Bande de roulement selon l'une quelconque des revendications 1 à 5 **caractérisée en ce que**, sur la face de contact d'au moins un élément de sculpture, le nombre moyen de puits par centimètre carré est inférieur ou égal à 15.

7. -. Bande de roulement selon l'une des revendications 1 à 6 **caractérisée en ce que**, sur la face de contact d'au moins un élément de sculpture, le nombre de puits par centimètre carré diminue sensiblement en allant du bord d'attaque (51) vers le bord de fuite (52).

8. - Bande de roulement selon l'une des revendications 1 à 7 **caractérisée en ce que** l'axe de chaque puits est sensiblement perpendiculaire à la face de contact de chaque élément de sculpture à l'état neuf.

9. **-** Bande de roulement selon l'une des revendications 1 à 7 **caractérisée en ce que** au moins un puits d'un élément de sculpture présente un axe principal faisant un angle différent de zéro avec une direction perpendiculaire à la face de contact de l'élément de sculpture.

10. **-** Bande de roulement selon l'une des revendications 1 à 7 **caractérisée en ce que** l'axe principal d'au moins un puits d'un élément de sculpture présente une inclinaison par rapport à une perpendiculaire à la face de contact dudit élément qui n'est pas constante dans l'épaisseur de la bande.

11. - Enveloppe de pneumatique comprenant une bande de roulement selon l'une quelconque des revendications 1 à 10.

12. - Enveloppe de pneumatique dont la bande de roulement est pourvue d'une sculpture conférant au pneumatique un sens préférentiel de roulage, cette bande de roulement comportant une pluralité d'éléments de sculpture, chaque élément de sculpture ayant une face supérieure de contact et des faces latérales s'étendant dans la direction de l'épaisseur de la bande; l'intersection de chaque face latérale avec la face supérieure formant une arête, la ou les arêtes rentrant les premières dans le contact formant le bord d'attaque de l'élément, la ou les arêtes sortant les dernières du contact formant le bord de fuite de l'élément ; au moins une pluralité d'éléments de sculpture comprend une pluralité de puits de section S et de profondeur H débouchant sur la face de contact desdits éléments ; chaque élément étant divisé en une partie avant et une partie arrière par un plan médian virtuel Pv, ledit plan médian Pv étant perpendiculaire à la face supérieure de contact de l'élément et à la direction longitudinale de la bande et passant en outre par le barycentre G de la face de contact de l'élément à l'état neuf, la partie avant' comprenant le bord d'attaque et la partie arrière comprenant le bord de fuite ; la bande de roulement est **caractérisée en ce que**, à l'état neuf et pour chaque élément de sculpture pourvus de puits, les puits ont des sections comprises entre 0.2 mm² et 12 mm², et **en ce que** le volume Vpa de l'ensemble des puits situés dans la partie avant de l'élément de sculpture est supérieur au volume Vpf de l'ensemble des puits situés dans la partie arrière dudit élément.

13. - Enveloppe de pneumatique selon la revendication 12 **caractérisée en ce qu**'au moins les éléments de sculpture situés dans la région médiane de sa bande de roulement sont pourvus de puits.

## Claims

1. A tread (1, 10) for a tyre, this tread being intended to impart to the tyre a preferred direction of travel, this tread comprising a plurality of tread pattern elements (2, 2', 14, 16, 17) (in the form of blocks and/or slices of rubber), each element being defined by cutouts of longitudinal (3, 3', 13) and transverse (4, 4', 12) general orientation, each element having an upper contact face and lateral faces extending in the direction of the thickness of the tread, the intersection of each lateral face with the upper contact face forming a ridge, the ridge(s) which are first to come back into contact forming the leading edge (51, 51', 141) of the element, the ridge(s) which are last to emerge from the contact forming the trailing edge of the element (52, 52', 142); a plurality of elements comprises a plurality of wells (6, 6', 15, 19, 20) of section S and of depth H which open on to its contact face; each element being divided into a front section and a rear section by a virtual median plane Pv, said median plane Pv being perpendicular to the upper contact face of the element and to the longitudinal direction of the tread and passing through the centre of mass G of the contact face of the element when new, the front section comprising the leading edge and the rear section comprising the trailing edge; the tread is **characterised in that**, when new and for each tread pattern element which is provided with at least one well (6, 6', 15, 19, 20), the volume Vpa of all the wells located in the front section of the tread pattern element is greater than the volume Vpf of all the wells located in the rear section of the tread pattern element.

2. A tread according to Claim 1, **characterised in that** the wells (6, 6', 15, 19, 20) have depths at least equal to 5 mm.

3. A tread according to Claim 2, **characterised in that** the wells (6, 6', 15, 19, 20) are arranged along at least two lines substantially parallel to the leading edge, the depths of the wells of two successive lines being different.

4. A tread according to one of Claims 1 to 3, **characterised in that** the wells (6, 6', 15, 19, 20) are arranged along at least two lines substantially parallel to the leading edge, the wells having sections S of between 0.2 mm² and 12 mm², the sections of the wells of two successive lines being different.

5. A tread according to Claim 2, **characterised in that** the wells (6) have their depths H which decrease gradually from a distance L from the leading edge (51) towards the trailing edge (52).

6. A tread according to any one of Claims 1 to 5, **characterised in that**, on the contact face of at least one tread pattern element, the average number of wells per square centimetre is less than or equal to 15.

7. A tread according to one of Claims 1 to 6, **characterised in that**, on the contact face of at least one tread pattern element, the number of wells per square centimetre decreases substantially from the leading edge (51) towards the trailing edge (52).

8. A tread according to any one of Claims 1 to 7, **characterised in that** the axis of each well is substantially perpendicular to the contact face of each tread pattern element when new.

9. A tread according to one of Claims 1 to 7, **characterised in that** at least one well of a tread pattern element has a main axis forming an angle other than zero with a direction perpendicular to the contact face of the tread pattern element.

10. A tread according to one of Claims 1 to 7, **characterised in that** the main axis of at least one well of a tread pattern element has an inclination relative to a line perpendicular to the contact face of said element which is not constant in the thickness of the tread.

11. A tyre comprising a tread according to any one of Claims 1 to 10.

12. A tyre, the tread of which is provided with a tread pattern which imparts to the tyre a preferred direction of travel, this tread comprising a plurality of tread pattern elements, each tread pattern element having an upper contact face and lateral faces extending in the direction of the thickness of the tread, the intersection of each lateral face with the upper face forming a ridge, the ridge(s) which is (are) first to come into contact forming the leading edge of the element, the ridge(s) which is (are) last to emerge from the contact forming the trailing edge of the element; at least a plurality of tread pattern elements comprises a plurality of wells of section S and of depth H which open on to the contact face of said elements; each element being divided into a front section and a rear section by a virtual median plane Pv, said median plane Pv being perpendicular to the upper contact face of the element and to the longitudinal direction of the tread and furthermore passing through the centre of mass G of the contact face of the element when new, the front section comprising the leading edge and the rear section comprising the trailing edge; the tread is **characterised in that**, when new and for each tread pattern element which is provided with wells, the wells have sections of between 0.2 mm² and 12 mm², and **in that** the volume Vpa of all the wells located in the front section of the tread pattern element is greater than the volume Vpf of all the wells located in the rear section of said element.

13. A tyre according to Claim 12, **characterised in that** at least the tread pattern elements located in the median region of its tread are provided with wells.

## Patentansprüche

1. Luftreifen-Lauffläche (1, 10), wobei diese Lauffläche vorgesehen ist, um dem Luftreifen eine bevorzugte Rollrichtung zu verleihen, wobei diese Lauffläche mehrere Profilelemente (2, 2', 14, 16, 17) (in Form von Gummiblöcken und/oder -lamellen) aufweist, wobei jedes Element von Ausschnitten mit allgemeiner Längsausrichtung (3, 3', 13) und Querausrichtung (4, 4', 12) begrenzt wird, wobei jedes Element eine obere Kontaktfläche und Seitenflächen hat, die sich in Richtung der Dicke der Lauffläche erstrecken, wobei die Schnittstelle jeder Seitenfläche mit der oberen Kontaktfläche einen Grat bildet, wobei der Grat oder die Grate, die als erste in den Kontakt kommen, die Vorderkante (51, 51', 141) des Elements bilden, wobei der Grat oder die Grate, die als letzte den Kontakt verlassen, die Hinterkante des Elements (52, 52', 142) bilden; wobei mehrere Elemente mehrere Schächte (6, 6', 15, 19, 20) mit einem Querschnitt S und einer Tiefe H aufweisen, die an ihrer Kontaktfläche münden; wobei jedes Element von einer virtuellen Mittelebene Pv in einen vorderen Bereich und einen hinteren Bereich aufgeteilt wird, wobei die Mittelebene Pv lotrecht zur oberen Kontaktfläche des Elements und zur Längsrichtung der Lauffläche liegt und durch das Baryzentrum G der Kontaktfläche des Elements im Neuzustand verläuft, wobei der vorderen Bereich die Vorderkante und der hintere Bereich die Hinterkante enthält; die Lauffläche ist **dadurch gekennzeichnet, dass** im Neuzustand und für jedes mit mindestens einem Schacht (6, 6', 15, 19, 20) versehene Profilelement das Volumen Vpa der Gesamtheit der Schächte, die sich im vorderen Bereich des Profilelements befinden, größer ist als das Volumen Vpf der Gesamtheit der Schächte, die sich im hinteren Bereich des Profilelements befinden.

2. Lauffläche nach Anspruch 1, **dadurch gekennzeichnet, dass** die Schächte (6, 6', 15, 19, 20) Tiefen mindestens gleich 5 mm haben.

3. Lauffläche nach Anspruch 2, **dadurch gekennzeichnet, dass** die Schächte (6, 6', 15, 19, 20) gemäß mindestens zwei Linien im Wesentlichen parallel zur Vorderkante angeordnet sind, wobei die Tiefen der Schächte von zwei aufeinanderfolgenden Linien unterschiedlich sind.

4. Lauffläche nach einem der Ansprüche 1 bis 3, **dadurch gekennzeichnet, dass** die Schächte (6, 6', 15, 19, 20) gemäß mindestens zwei Linien angeordnet sind, die im Wesentlichen parallel zur Vorderkante liegen, wobei die Schächte Querschnitte S haben, die zwischen 0,2 mm² und 12 mm² liegen, wobei die Querschnitte der Schächte von zwei aufeinanderfolgenden Linien unterschiedlich sind.

5. Lauffläche nach Anspruch 2, **dadurch gekennzeichnet, dass** die Tiefen H der Schächte (6) ausgehend von einem Abstand L von der Vorderkante (51) in Richtung zur Hinterkante (52) progressiv abnehmen.

6. Lauffläche nach einem der Ansprüche 1 bis 5, **dadurch gekennzeichnet, dass** auf der Kontaktfläche mindestens eines Profilelements die mittlere Anzahl von Schächten pro Quadratzentimeter geringer als oder gleich 15 ist.

7. Lauffläche nach einem der Ansprüche 1 bis 6, **dadurch gekennzeichnet, dass** auf der Kontaktfläche mindestens eines Profilelements die Anzahl von Schächten pro Quadratzentimeter von der Vorderkante (51) zur Hinterkante (52) deutlich abnimmt .

8. Lauffläche nach einem der Ansprüche 1 bis 7, **dadurch gekennzeichnet, dass** die Achse jedes Schachts im Wesentlichen lotrecht zur Kontaktfläche jedes Profilelements im Neuzustand liegt.

9. Lauffläche nach einem der Ansprüche 1 bis 7, **dadurch gekennzeichnet, dass** mindestens ein Schacht eines Profilelements eine Hauptachse aufweist, die einen Winkel ungleich Null mit einer Richtung lotrecht zur Kontaktfläche des Profilelements bildet.

10. Lauffläche nach einem der Ansprüche 1 bis 7, **dadurch gekennzeichnet, dass** die Hauptachse mindestens eines Schachts eines Profilelements eine Neigung bezüglich einer Lotrechten zur Kontaktfläche des Elements aufweist, die in der Dicke der Lauffläche nicht konstant ist.

11. Luftreifenmantel, der eine Lauffläche nach einem der Ansprüche 1 bis 10 aufweist.

12. Luftreifenmantel, dessen Lauffläche mit einem Profil versehen ist, das dem Luftreifen eine bevorzugte Rollrichtung verleiht, wobei diese Lauffläche mehrere Profilelemente aufweist, wobei jedes Profilelement eine obere Kontaktfläche und Seitenflächen aufweist, die sich in Richtung der Dicke der Lauffläche erstrecken, wobei die Schnittstelle jeder Seitenfläche mit der Oberfläche einen Grat bildet, wobei der Grat oder die Grate, die als erste in den Kontakt kommen, die Vorderkante des Elements bilden, wobei der Grat oder die Grate, die als letzte den Kontakt verlassen, die Hinterkante des Elements bilden; wobei mindestens mehrere Profilelemente mehrere Schächte mit einem Querschnitt S und einer Tiefe H aufweisen, die an der Kontaktfläche der Elemente münden; wobei jedes Element durch eine virtuelle Mittelebene Pv in einen vorderen Bereich und einen hinteren Bereich aufgeteilt wird, wobei die Mittelebene Pv lotrecht zur oberen Kontaktfläche des Elements und zur Längsrichtung der Lauffläche liegt und außerdem durch das Baryzentrum G der Kontaktfläche des Elements im Neuzustand verläuft, wobei der vordere Bereich die Vorderkante und der hintere Bereich die Hinterkante enthält; die Lauffläche ist **dadurch gekennzeichnet, dass** im, Neuzustand und für jedes mit Schächten versehene Profilelement die Schächte Querschnitte haben, die zwischen 0,2 mm² und 12 mm² liegen, und dass das Volumen Vpa der Gesamtheit der Schächte, die sich im vorderen Bereich des Profilelements befinden, größer ist als das Volumen Vpf der Gesamtheit der Schächte, die sich im hinteren Bereich des Elements befinden.

13. Luftreifenmantel nach Anspruch 12, **dadurch gekennzeichnet, dass** mindestens die Profilelemente, die sich in der mittleren Zone seiner Lauffläche befinden, mit Schächten versehen sind.
